# EUROPEAN PATENT APPLICATION

(11) **EP 4 567 739 A1**
(43) Date of publication of application: **11.06.2025**
(21) Application number: 23893613.2
(22) Date of filing: 03.11.2023
(51) Int. Cl.: G06T 17/00, G06V 10/80

(54) **IMAGE PROCESSING METHOD AND APPARATUS, AND DEVICE**

(30) Priority: 23.11.2022 CN 202211477751
(71) Applicant: Hangzhou Alibaba International Internet Industry Co., Ltd., Hangzhou, Zhejiang 310052 (CN)
(72) Inventor: WANG, Gaige, Hangzhou, Zhejiang 311121 (CN); LIU, Kuilong, Hangzhou, Zhejiang 311121 (CN)
(74) Representative: Marks & Clerk LLP
(86) International application number: PCT/CN2023/129575
(87) International publication number: WO 2024/109522

(57) **Abstract**

The present application provides embodiments of an image processing method, device, and equipment. The method includes: obtaining, by an electronic device, at least two images of a target object to be processed, wherein the at least two images to be processed include images captured from at least two different shooting angles; inputting the at least two images to be processed into a target 3D reconstruction model to reconstruct a target 3D body shape corresponding to the target object; the target 3D reconstruction model is trained based on M preset dimensional key points, wherein M is a positive integer; and outputting the target 3D body shape. By inputting at least two images into the target 3D reconstruction model, the embodiments of the present application enable obtaining the target object's 3D body shape, thereby improving the convenience of body shape reconstruction and reducing costs. Additionally, as the target 3D reconstruction model is trained based on preset dimensional key points, the reconstruction achieves higher precision. Furthermore, using images captured from different angles as input improves the accuracy of human body shape reconstruction.

## Description

### CROSS -REFERENCE TO RELATED APPLICATION

This application claims priority to the Chinese patent application filed on November 23, 2022, with the application number 202211477751.3 entitled "Image Processing Method, Device and Equipment," the entirety of which is incorporated herein by reference.

### TECHNICAL FIELD

This application relates to the field of computer technology, and more particularly, to an image processing method for device and equipment.

### BACKGROUND

With the continuous development of technologies such as the Internet and the Internet of Things (IoT), various industries are gradually undergoing digital transformation. Against the backdrop of digitalization, the digitization of human body features is becoming increasingly important in industries such as apparel. Consumers can use body feature data to purchase clothing, effectively addressing challenges such as difficulties in size selection and high return rates during online shopping.

In the related art, one approach to digitizing human body features involves using specialized scanning equipment for body feature reconstruction. This method requires interaction between the user and the specialized scanning equipment, which is neither convenient nor cost-effective. Another approach involves electronic devices estimating the user's size information based on images. However, this estimation method lacks accuracy and significantly deviates from the user's actual body shape.

### SUMMARY

Various aspects of the present application provide an image processing method, device, and equipment, aimed at improving the convenience and accuracy of body shape reconstruction while reducing its cost.

**In** a first aspect, embodiments of the present application provide an image processing method, which includes:
obtaining at least two images of a target object to be processed, wherein the at least two images to be processed include images captured from at least two different shooting angles;
inputting the at least two images to be processed into a target three-dimensional (3D) reconstruction model to reconstruct a target 3D body shape corresponding to the target object, wherein the target 3D reconstruction model is trained based on M preset dimensional key points, and M is a positive integer; and
outputting the target 3D body shape.

**In** some embodiments, inputting the at least two images to be processed into the target three-dimensional (3D) reconstruction model to reconstruct the target 3D body shape corresponding to the target object includes:
determining a global feature, a shooting parameter, and a posture parameter corresponding to the target object based on the at least two images to be processed through the target 3D reconstruction model;
reconstructing the target 3D body shape based on the global feature, shooting parameter, and posture parameter through the target 3D reconstruction model.

**In** some embodiments, determining the global feature corresponding to the target object through the target three-dimensional (3D) reconstruction model includes:
identifying, in the image to be processed, an image region where the target object is located;
segmenting the image region from the images to be processed to obtain at least two target image patches corresponding to the target object;
determining a set of semantic features corresponding to each of the target image patches; and
fusing at least two sets of the semantic features to obtain the global feature.

**In** some embodiments, determining a set of semantic features corresponding to each of the target image patches includes:
inputting each of the target image patches into a convolutional neural network (CNN)-based deep encoder to extract a set of semantic features corresponding to the target image patch, wherein the target three-dimensional (3D) reconstruction model includes the CNN-based deep encoder.

In some embodiments, fusing the at least two sets of the semantic features to obtain the global feature includes:
inputting the at least two sets of semantic features as at least two sequences into a feature fusion module to obtain the global feature, wherein the target three-dimensional (3D) reconstruction model includes the feature fusion module.

In some embodiments, determining the shooting parameter and posture parameter corresponding to the target object through the target three-dimensional (3D) reconstruction model includes:
performing prediction processing on the images to be processed using an encoder and a regressor to obtain the shooting parameter and posture parameter, wherein the target 3D reconstruction model includes the encoder and the regressor.

In some embodiments, reconstructing the target 3D body shape based on the global feature, shooting parameter, and posture parameter through the target 3D reconstruction model includes:
fitting the global feature, shooting parameter, and posture parameter to obtain a predicted parameter; and
inputting the predicted parameter into a human body reconstruction model to obtain the target 3D body shape, wherein the target 3D reconstruction model includes the human body reconstruction model.

In some embodiments, before inputting the at least two images to be processed into the target three-dimensional (3D) reconstruction model, the method further includes:
inputting a sample image into a preset 3D reconstruction model to obtain a sample 3D body shape;
projecting the sample 3D body shape onto a two-dimensional (2D) plane to obtain sample projection dimensional key points corresponding to the sample 3D body shape;
comparing the sample projection dimensional key points with preset dimensional key points to determine a loss value;
adjusting the parameters of the preset 3D reconstruction model based on the loss value and performing iterative training to obtain the target 3D reconstruction model.

In some embodiments, outputting the target three-dimensional (3D) body shape includes:
performing preset processing on the target 3D body shape to obtain a 3D body shape to be displayed, wherein the preset processing includes at least one of clothing addition or facial processing;
displaying the 3D body shape to be displayed.

**In** some embodiments, after outputting the target three-dimensional (3D) body shape, the method further includes:
in response to a touch operation performed on the target 3D body shape, adjusting the target 3D body shape according to a preset adjustment type corresponding to the touch operation, wherein the preset adjustment type includes at least one of rotation, magnification, or reduction.

**In** a second aspect, embodiments of the present application provide an image processing method, including:
in response to a touch operation on a first control, obtaining at least two images of a target object to be processed, wherein the at least two images include images captured from at least two different shooting angles;
in response to a touch operation on a second control, inputting the at least two images to be processed into a target three-dimensional (3D) reconstruction model to reconstruct a target 3D body shape corresponding to the target object, wherein the target 3D reconstruction model is trained based on M preset dimensional key points, and M is a positive integer;
outputting and displaying the target 3D body shape.

In a third aspect, embodiments of the present application provide an image processing device, which includes:
an acquisition module, configured to obtain at least two images of a target object to be processed, wherein the at least two images include images captured from at least two different shooting angles;
a reconstruction module, configured to input the at least two images to be processed into a target three-dimensional (3D) reconstruction model to reconstruct a target 3D body shape corresponding to the target object, wherein the target 3D reconstruction model is trained based on M preset dimensional key points, and M is a positive integer; and
an output module, configured to output the target 3D body shape.

In some embodiments, the reconstruction module is specifically configured to:
determine a global feature, a shooting parameter, and a posture parameter corresponding to the target object based on the at least two images to be processed through the target three-dimensional (3D) reconstruction model;
reconstruct the target 3D body shape based on the global feature, shooting parameter, and posture parameter through the target 3D reconstruction model.

In some embodiments, the reconstruction module is specifically configured to:
identify, in the image to be processed, an image region where the target object is located;
segment the image region from the images to be processed to obtain at least two target image patches corresponding to the target object;
determine a set of semantic features corresponding to each of the target image patches; and
fuse at least two sets of the semantic features to obtain the global feature.

In some embodiments, the reconstruction module is specifically configured to:
input each of the target image patches into a deep encoder based on a convolutional neural network (CNN) to extract a set of semantic features corresponding to the target image patch; wherein the target 3D reconstruction model includes the deep encoder based on the convolutional neural network.

In some embodiments, the reconstruction module is specifically configured to:
input the at least two sets of semantic features as at least two sequences into a feature fusion module to obtain the global feature, wherein the target three-dimensional (3D) reconstruction model includes the feature fusion module.

In some embodiments, the reconstruction module is specifically configured to:
perform prediction processing on the images to be processed using an encoder and a regressor to obtain the shooting parameter and posture parameter, wherein the target three-dimensional (3D) reconstruction model includes the encoder and the regressor.

In some embodiments, the reconstruction module is specifically configured to:
fit the global feature, shooting parameter, and posture parameter to obtain a predicted parameter;
input the predicted parameter into a human body reconstruction model to obtain the target three-dimensional (3D) body shape, wherein the target 3D reconstruction model includes the human body reconstruction model.

In some embodiments, the device further includes:
an inputting module, configured to input a sample image into a preset three-dimensional (3D) reconstruction model to obtain a sample 3D body shape;
a projection module, configured to project the sample 3D body shape onto a two-dimensional (2D) plane to obtain sample projection dimensional key points corresponding to the sample 3D body shape;
a determination module, configured to compare the sample projection dimensional key points with preset dimensional key points to determine a loss value; and
a training module, configured to adjust the parameters of the preset 3D reconstruction model based on the loss value and perform iterative training to obtain the target 3D reconstruction model.

In some embodiments, the output module is specifically configured to:
perform preset processing on the target three-dimensional (3D) body shape to obtain a 3D body shape to be displayed, wherein the preset processing includes at least one of clothing addition or facial processing;
display the 3D body shape to be displayed.

In some embodiments, the device further includes:
an adjustment module is configured to, in response to a touch operation performed on the target three-dimensional (3D) body shape, adjust the target 3D body shape according to a preset adjustment type corresponding to the touch operation, wherein the preset adjustment type includes at least one of rotation, magnification, or reduction.

In a fourth aspect, embodiments of the present application also provide an image processing device, which includes:
an acquisition module configured to, in response to a touch operation on a first control, obtain at least two images of a target object to be processed, wherein the at least two images include images captured from at least two different shooting angles;
a reconstruction module configured to, in response to a touch operation on a second control, input the at least two images to be processed into a target three-dimensional (3D) reconstruction model to reconstruct the target 3D body shape corresponding to the target object, wherein the target 3D reconstruction model is trained based on M preset dimensional key points, and M is a positive integer;
a display module, configured to output and display the target 3D body shape.

In a fifth aspect, embodiments of the present application provide an electronic device, which includes:
a memory configured to store computer-executable instructions; and
a processor configured to execute the computer-executable instructions stored in the memory, such that the processor performs the image processing method according to any one of the methods described in the first or second aspect.

In a sixth aspect, embodiments of the present application provide a computer-readable storage medium, wherein the computer-readable storage medium stores computer-executable instructions, and when the computer-executable instructions are executed by a processor, they are used to implement any one of the image processing methods described in the first or second aspect.

In a seventh aspect, embodiments of the present application provide a computer program product, which includes a computer program that, when executed by a processor, implements any one of the image processing methods described in the first or second aspect.

In this application embodiment, the electronic device acquires at least two images of a target object to be processed. These images include images captured from at least two different shooting angles. The at least two images are then input into a target three-dimensional (3D) reconstruction model to reconstruct the target 3D body shape corresponding to the target object. This target 3D reconstruction model is trained based on M preset dimensional key points, where M is a positive integer. The target 3D body shape is subsequently output. In this way, the embodiment of this application allows the reconstruction of the target object's 3D body shape by inputting at least two images into the target 3D reconstruction model. This improves the convenience of body shape reconstruction and reduces costs. Moreover, as the target 3D reconstruction model is trained based on preset dimensional key points, it achieves higher accuracy. Additionally, by using images from different perspectives as input, the accuracy of human body shape reconstruction is further enhanced.

### BRIEF DESCRIPTION OF THE DRAWINGS

The drawings described here are provided to further understand this application and constitute a part of the application. The illustrative embodiments of the application and their descriptions are used to explain the application and do not impose improper limitations on it. In the drawings:
FIG. 1 is a schematic diagram of an application scenario provided by an exemplary embodiment of this application;
FIG. 2 is a schematic diagram of human body size information display in the related technology;
FIG. 3 is a schematic flow diagram of an image processing method provided by an exemplary embodiment of this application;
FIG. 4 is a schematic diagram of human skeletal key points in the related technology;
FIG. 5 is a schematic diagram of preset dimensional key points provided by an exemplary embodiment of this application;
FIG. 6 is a schematic flow diagram of another image processing method provided by an exemplary embodiment of this application;
FIG. 7 is a schematic diagram of prediction for shooting parameters and posture parameters provided by an exemplary embodiment of this application;
FIG. 8 is a schematic flow diagram of training the target 3D reconstruction model provided by an exemplary embodiment of this application;
FIG. 9 is a schematic diagram of the technical logic of image processing provided by an exemplary embodiment of this application;
FIG. 10 is a schematic flow diagram of another image processing method provided by an exemplary embodiment of this application;
FIG. 11 is a schematic structural diagram of an image processing device provided by an exemplary embodiment of this application;
FIG. 12 is a schematic structural diagram of another image processing device provided by an exemplary embodiment of this application;
FIG. 13 is a schematic structural diagram of an electronic device provided by an exemplary embodiment of this application.

### DETAIL DESCRIPTION OF THE EMBODIMENTS

To make the objectives, technical solutions, and advantages of this application clearer, the technical solutions of this application will be described in detail and comprehensively below in conjunction with specific embodiments and corresponding drawings. It is evident that the described embodiments are only a portion of the embodiments of this application and not all of them. Based on the embodiments in this application, all other embodiments obtained by those skilled in the art without creative effort are within the scope of protection of this application.

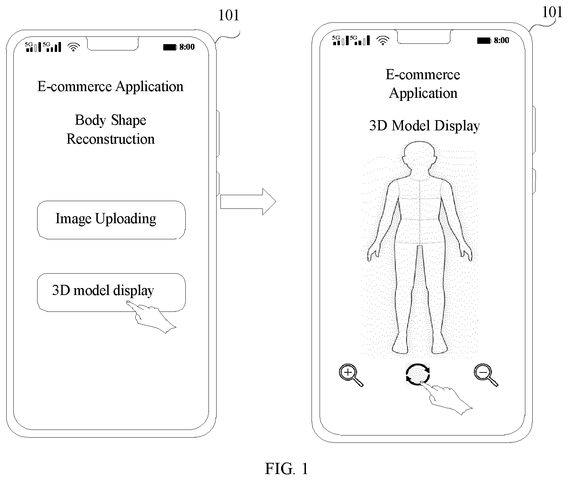

FIG. 1 is a schematic diagram of an application scenario provided by an exemplary embodiment of this application. As shown in FIG. 1, it includes an electronic device 101. The electronic device 101 can be a smartphone, a computer, a smart wearable watch, or other devices. The specific type of electronic device 101 is not limited in this embodiment of the application.

As shown in FIG. 1, when a user performs body feature digitization, i.e., body shape reconstruction, using the electronic device 101, they can first click on an image upload control to upload at least two images to be processed. Afterward, the user can click on a 3D model display control, and the electronic device can generate a three-dimensional (3D) model of the human body that closely matches the user's features and display the 3D model on a model display page. On the model display page, the user can interact with the 3D model of the human body by performing operations such as zooming in, zooming out, or rotating.

In the context of digitalization, the digitization of human body features is significant for many industries. For instance, in the apparel industry, body shape digitization can help recommend clothing styles suitable for a consumer's (user's) body type (e.g., broad shoulders, long legs, petite figure). It can also suggest the appropriate size of clothing based on the consumer's size data, addressing the issue of size selection difficulties during online shopping. Furthermore, it can assist industries and merchants in reducing the high return rates caused by size mismatches.

Therefore, quickly building a large-scale consumer body feature database in a low-cost manner is a key capability for applications in the apparel industry, such as extracting consumer body shape tags, measuring human body dimensions, and recommending clothing sizes. It also serves as one of the foundational capabilities for technologies like virtual try-on and metaverse digital human twins. In related technologies, the digitization of human body features is typically achieved through the following two approaches.

The first approach involves using professional scanning equipment for 3D human body reconstruction (3D reconstruction). This 3D reconstruction typically refers to 3D mesh reconstruction, which can reconstruct the geometric contours of a target object but does not include textures to obtain a texture-less model of the object. The method of performing 3D reconstruction with professional scanning equipment requires users to physically enter large 3D scanning devices or have a professional operate portable 3D scanning equipment to conduct the reconstruction. This method of body shape reconstruction has high equipment costs and requires users to be physically present at the location, making it inconvenient and inefficient.

The second approach is size estimation based on a single image. This method uses a single image of a human body to estimate the user's size information. However, it results in significant errors in representing the human body shape and cannot accurately reconstruct a 3D model of the human body. Additionally, using a single image for two-dimensional reconstruction has low accuracy.

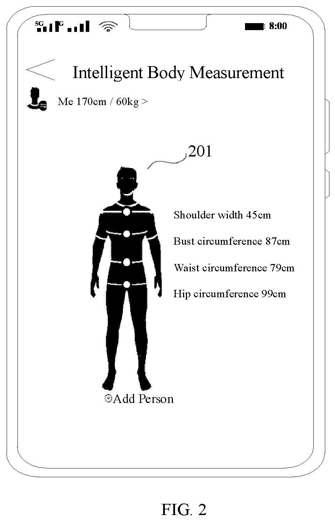

For illustration, FIG. 2 shows a schematic diagram of human body size information display in related technologies. As shown in FIG. 2, based on a single image uploaded by the user, the electronic device can estimate the user's size information, such as shoulder width and body measurements (e.g., bust, waist, and hips). Subsequently, the electronic device can display fixed preset two-dimensional (2D) images 201 (for example, two preset 2D images can be preconfigured) and present the user's size information through dimensional annotations. In this way, the electronic device can later establish a consumer body feature profile for size guidance and size recommendations. However, this size estimation method, as it is based solely on a single image, does not achieve 3D body shape reconstruction and thus has low accuracy.

As can be seen, in related technologies, human pose and shape reconstruction (HPS) involves high costs, lacks convenience, and suffers from low accuracy and precision.

In the embodiments of this application, the electronic device acquires at least two images of a target object to be processed. These images include images captured from at least two different shooting angles. The at least two images are then input into a target three-dimensional (3D) reconstruction model to reconstruct the target 3D body shape corresponding to the target object. This target 3D reconstruction model is trained based on M preset dimensional key points, where M is a positive integer. The target 3D body shape is then output. In this way, the embodiment of this application enables 3D body shape reconstruction of the target object by inputting at least two images into the target 3D reconstruction model. This improves the convenience of body shape reconstruction and reduces costs. Additionally, since the target 3D reconstruction model is trained based on preset dimensional key points, it achieves higher precision. Moreover, using images captured from different angles as input enhances the accuracy of human body shape reconstruction.

The technical solutions presented in this application are described in detail below through specific embodiments. It should be noted that the following embodiments can exist independently or be combined with each other. For identical or similar content, explanations will not be repeated across different embodiments.

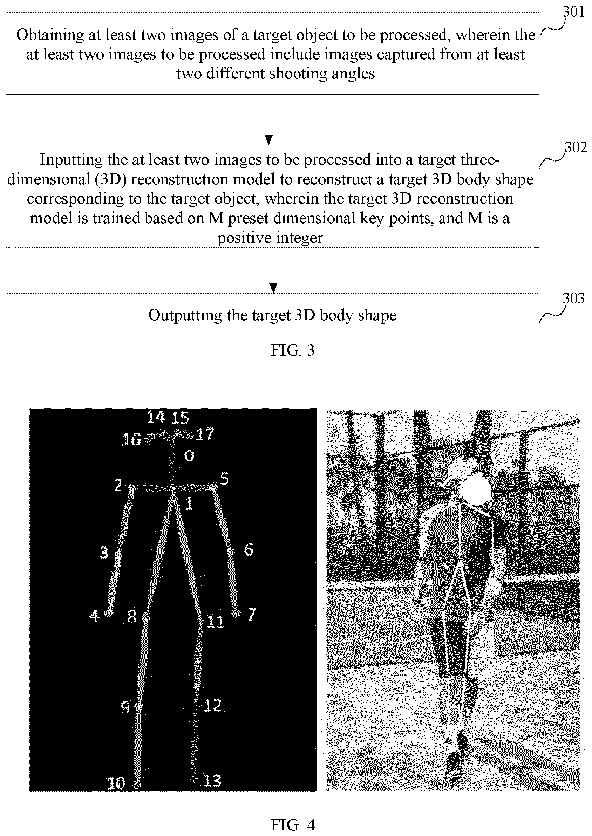

FIG. 3 is a schematic flow diagram of an image processing method provided by an exemplary embodiment of this application. Please refer to FIG. 3. The method may include the following steps:
S301: obtaining at least two images of a target object to be processed, wherein the at least two images to be processed include images captured from at least two different shooting angles.

The execution entity of the embodiments of this application can be an electronic device or an image processing device set within the electronic device. The electronic device can refer to a user-side terminal device or a cloud server. The image processing device can be implemented through software or a combination of software and hardware. This application embodiment does not impose any restrictions on the specific execution entity. For ease of understanding, the following explanation takes an electronic device as the execution entity as an example.

In the embodiments of this application, the target object may refer to a consumer, user, or similar entity. The images to be processed refer to the images uploaded by the user. The number of images to be processed is at least two, corresponding to at least two shooting angles. For example, the images to be processed may include an image captured from a frontal view and an image captured from a side view. Subsequently, features related to the width of the human body can be extracted from the frontal view image, while features related to the depth (thickness) of the human body can be extracted from the side view image. In this way, compared to the methods in related technologies that estimate dimensions based on a single image from a monocular view, the embodiments of this application perform human body shape reconstruction based on at least two images captured from at least two shooting angles. This provides more essential information, ensuring the completeness and comprehensiveness of subsequent human body feature extraction, thereby improving the accuracy of body shape reconstruction.

Specifically, when human body shape reconstruction is required, the user can interact with a preset control on the electronic device. This preset control can be, for example, an image upload control or a body shape reconstruction control. The specific configuration of the preset control is not limited in this application embodiment. In response to the user's touch operation, the electronic device displays an image upload page. The user can either capture at least two images from different perspectives in real-time for upload or select at least two images from different perspectives from the local photo gallery for upload. In this way, the electronic device can acquire at least two images to be processed, captured from at least two shooting angles.

S302: inputting the at least two images to be processed into a target three-dimensional (3D) reconstruction model to reconstruct a target 3D body shape corresponding to the target object, wherein the target 3D reconstruction model is trained based on M preset dimensional key points, and M is a positive integer.

In the embodiments of this application, the target three-dimensional (3D) reconstruction model refers to a model used for 3D body shape reconstruction. The target 3D reconstruction model may include a plurality of sub-models, such as a human detector, a deep encoder (encoder), a feature fusion module (e.g., transformer fusion), a fitting module (regression), a regressor, and a human body reconstruction model (3D mesh), among others. It may also include other models. The specific composition of the target 3D reconstruction model is not limited in this application embodiment.

The human body shape is unique, distinguishing it from the human body pose. While a person's pose can vary infinitely, their body shape is singular, similar to the uniqueness of a human face. Body shape is one of the most important characteristics of the human body. The target 3D body shape refers to the 3D reconstruction model of the target object, which corresponds to the human body shape of the target object. The target 3D reconstruction model can be deployed on a cloud server. In this case, the electronic device can upload at least two images to be processed to the cloud server, which performs image processing and returns the target 3D body shape to the electronic device. This approach improves processing speed and conserves the electronic device's resources. Alternatively, the target 3D reconstruction model can also be deployed locally on the electronic device, allowing the device itself to perform image processing to obtain the target 3D body shape. This application embodiment does not impose limitations on the deployment location of the target 3D reconstruction model.

Preset dimensional key points refer to preconfigured key points that represent the dimensions of the human body shape. The number of these preset dimensional key points can be M, which could specifically be 62 or another number. This application embodiment does not impose limitations on the exact number of preset dimensional key points.

In related technologies, skeletal key points are typically used to supervise the reconstruction of body shape and pose. However, skeletal key points can usually only estimate the pose and cannot accurately predict the body shape. This is because the same set of skeletal key points can correspond to different body shapes. For instance, when a user's body weight changes (e.g., gaining or losing weight), the skeletal key points remain mostly unchanged, but the body shape undergoes significant changes.

FIG. 4 is a schematic diagram of skeletal key points in related technologies. As shown in FIG. 4, 17 skeletal key points are defined in related technologies, corresponding to a plurality of joints of the human body. These key points can effectively estimate the pose and actions of the human body. However, they cannot accurately reflect the user's body shape, such as weight changes (e.g., fatness or thinness).

In this application embodiment, preset dimensional key points of the human body are used to supervise the reconstruction of body shape, and the target three-dimensional (3D) reconstruction model is trained accordingly. This approach can accurately reflect the actual size parameters of various parts of the user's body, ensuring better correspondence between the key points and body shape parameters. It allows for a precise representation of the human body shape, thereby improving the accuracy of body shape reconstruction.

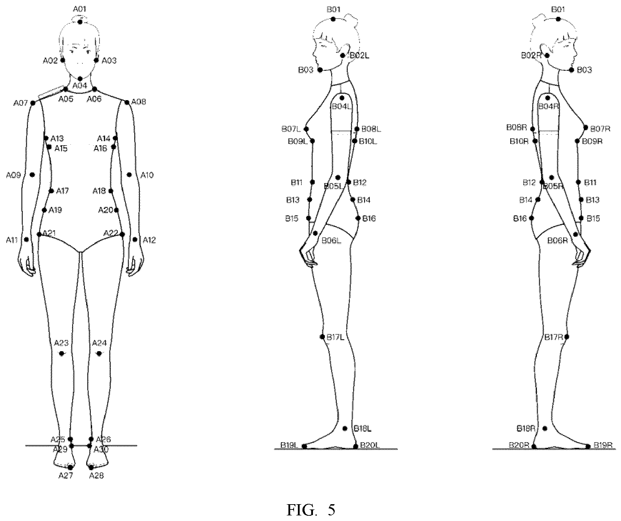

For illustration, FIG. 5 is a schematic diagram of preset dimensional key points provided by an exemplary embodiment of this application. As shown in FIG. 5, this embodiment uses 62 preset dimensional key points, which can accurately reflect the size parameters of various parts of the human body. Compared to skeletal key points, preset dimensional key points can more efficiently and accurately represent human body shapes, addressing the issue where the same set of skeletal key points may correspond to a plurality of body shapes. It should be noted that the number M of preset dimensional key points can also be other values, and their positions can be set to different locations. These settings can be flexibly adjusted based on actual needs. This application embodiment does not impose limitations on the number or positions of the preset dimensional key points.

S303: outputting the target three-dimensional (3D) body shape.

In this application embodiment, after determining the target 3D body shape, the electronic device can output and display the target 3D body shape. The user can intuitively view the 3D human model and subsequently use this 3D model for tasks such as selecting and purchasing clothing.

Optionally, before displaying the target 3D body shape, the electronic device can process the 3D body shape. For example, it can add hair, clothing, or blur the face for privacy. The electronic device can also load and render animations and display the target 3D body shape in an animated format, enhancing the liveliness and appeal of the model display.

In this application embodiment, the electronic device acquires at least two images of the target object to be processed. These images include images captured from at least two different shooting angles. The at least two images are then input into a target three-dimensional (3D) reconstruction model to reconstruct the 3D body shape corresponding to the target object. The target 3D reconstruction model is trained based on M preset dimensional key points, where M is a positive integer. The target 3D body shape is then output. In this way, by inputting at least two images into the target 3D reconstruction model, the embodiment achieves the reconstruction of the target object's 3D body shape, enhancing the convenience of body shape reconstruction and reducing costs. Additionally, since the target 3D reconstruction model is trained based on preset dimensional key points, it provides higher precision. Moreover, using images captured from different angles as input improves the accuracy of human body shape reconstruction.

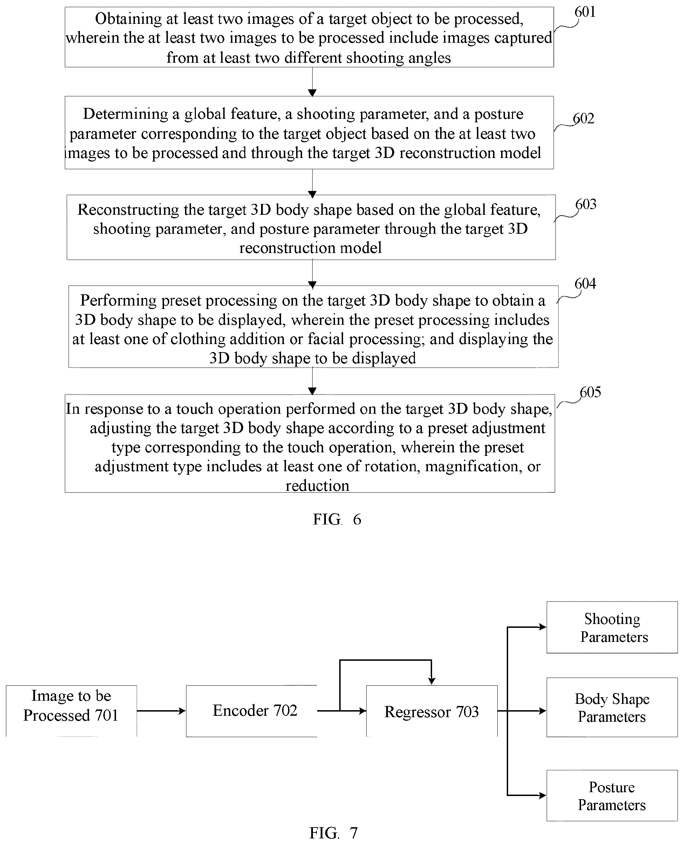

Building on the above embodiment, FIG. 6 illustrates the flow diagram of another image processing method provided by an exemplary embodiment of this application. Please refer to FIG. 6. This image processing method may include the following steps:
S601: obtaining at least two images of the target object to be processed, wherein the at least two images include images captured from at least two different shooting angles.
   The specific implementation of S601 can refer to the previously described S301, and this application embodiment will not elaborate further here.
S602: determining a global feature, a shooting parameter, and a posture parameter corresponding to the target object based on the at least two images to be processed and through the target 3D reconstruction model.

In this embodiment, global features refer to the collection of the target object's human body shape characteristics across various dimensions. Shooting parameters refer to parameters such as the camera's shooting height, shooting angle, etc. Posture parameters include the target object's pose and body shape parameters. Specifically: pose parameters refer to the gestures or posture of the target object, which can be represented using a rotation matrix. This rotation matrix may include information such as the rotation direction and rotation angle of a specific body part relative to a certain joint. Shape parameters refer to the three-dimensional data of the target object, which may include specific measurements such as shoulder width, height, chest depth, etc., represented in numerical form.

After the electronic device inputs at least two images to be processed into the target three-dimensional (3D) reconstruction model, the model can determine the global features, shooting parameters, and posture parameters based on the images. Subsequently, these parameters can be used to reconstruct the 3D body shape model of the human body.

In one possible implementation, the global features can be obtained through the following steps (1) to (4):
(1): identifying the image region where the target object is located in the images to be processed.
(2): segmenting the identified image region from the images to obtain at least two target image patches corresponding to the target object.
   In this application embodiment, target image patches (patches) refer to rectangular image regions in the images to be processed that include the target object. The target 3D reconstruction model may include a human detector, which is used to detect the location of the person in the images to be processed. The electronic device can use the human detector to identify the image region where the target object is located in the images to be processed. Subsequently, this image region can be segmented. In this way, each image to be processed can yield one target patch, and at least two images to be processed can correspond to at least two target patches.
(3): determining a set of semantic features corresponding to each target image patch.

In this application embodiment, semantic features (feats) refer to characteristics such as the human body contours of the target object within the target patches. These semantic features are learned by the target 3D reconstruction model through large amounts of sample data, without requiring manual definition. During the training process, users only need to input the data and specify the learning objectives. The 3D reconstruction model autonomously learns and extracts the semantic features, simplifying user operations and improving convenience.

In one possible implementation, step (3) can be achieved as follows:
inputting each target image patch into a deep encoder based on a convolutional neural network (CNN) to extract a set of semantic features corresponding to the target patch. The target 3D reconstruction model includes a deep encoder based on a convolutional neural network.

In this application embodiment, the target 3D reconstruction model may include a deep encoder based on a convolutional neural network (CNN-based Encoder), where the encoder's weights are shared. The electronic device can input each target image patch into this weight-sharing deep encoder to extract the semantic features.

(4): fusing at least two sets of semantic features to obtain the global features.

In this application embodiment, since at least two images to be processed correspond to at least two shooting angles, the semantic features extracted under each shooting angle may differ. Therefore, after the electronic device extracts at least two sets of semantic features corresponding to at least two target patches, it can fuse these semantic features to obtain the target object's overall, multi-angle global features (fused feats).

In one possible implementation, step (4) can be achieved as follows:
inputting the at least two sets of semantic features as at least two sequences into a feature fusion module to obtain the global features. The target 3D reconstruction model includes a feature fusion module.

In this embodiment, the target 3D reconstruction model may include a feature fusion module, which is used to fuse the semantic features to obtain the global features. After extracting at least two sets of semantic features, the electronic device can treat the N semantic features as N sequences (where N is a positive integer greater than or equal to 2). For example, sequence 1 could represent the target object captured from the frontal view, while sequence 2 could represent the target object captured from the side view. The electronic device can input these N semantic features into the feature fusion module to obtain the global features corresponding to the target object. By fusing the semantic features to derive the global features, this approach ensures the comprehensiveness and accuracy of feature extraction.

In one possible implementation, the shooting parameters and posture parameters can be obtained as follows:
performing prediction processing on the images to be processed using an encoder and a fitting module to obtain the shooting parameters and posture parameters; the target 3D reconstruction model includes an encoder and a fitting module.

In this application embodiment, the target 3D reconstruction model may include an encoder (encoder) and a regressor (regression). The encoder and regressor can be used to perform prediction processing on the images to be processed, determining the shooting parameters as well as the posture parameters (pose parameters and body shape parameters) of the images.

As an example, FIG. 7 illustrates the prediction process of shooting parameters and posture parameters in an exemplary embodiment of this application. As shown in FIG. 7, the electronic device can input the image to be processed 701 into the encoder 702. The encoder 702 performs encoding, and the regressor 703 performs fitting. Through this process, the shooting parameters, pose parameters, and body shape parameters can be obtained.

S603: reconstructing the target 3D body shape based on the global feature, shooting parameter, and posture parameter through the target 3D reconstruction model.

In this application embodiment, after determining the global features, shooting parameters, and posture parameters, the electronic device can reconstruct the target 3D body shape based on these parameters using the target 3D reconstruction model.

In one possible implementation, S403 can be achieved through the following steps (5) to (6):
(5): fitting the global features, shooting parameters, and posture parameters to obtain the predicted parameters.
(6): inputting the predicted parameters into the human body reconstruction model to obtain the target 3D body shape; the target 3D reconstruction model includes the human body reconstruction model.

In this embodiment, the predicted parameters refer to a parameter array composed of the global features, shooting parameters, and posture parameters. The target 3D reconstruction model may include a regressor built using a fully connected network (fc-based regressor), which is used to perform feature fitting and obtain the predicted parameters. In this step, the fused features can be used as the input to the fully connected network-based regressor, which fits parameters such as the shooting parameters and posture parameters (params) to derive the predicted parameters.

The target 3D reconstruction model may include a human body reconstruction model, which can be an extended human model that supports preset dimensional key points (e.g., extended-SMPL) for reconstructing the 3D body shape model (3D mesh). The electronic device can fit the global features, shooting parameters, and posture parameters to obtain the predicted parameters, then input these predicted parameters into the human body reconstruction model to reconstruct the target 3D body shape. In this way, through feature fitting and 3D model reconstruction, the system can accurately generate the 3D body shape model, significantly improving the precision of body shape reconstruction.

It should be understood that the sequence numbers in this application embodiment are used only for differentiation and do not impose any restrictions on the order of the steps. The order of the steps can be flexibly adjusted based on actual requirements, and this application embodiment does not place any limitations on this aspect.

S604: performing preset processing on the target 3D body shape to obtain a 3D body shape to be displayed, wherein the preset processing includes at least one of clothing addition or facial processing; and displaying the 3D body shape to be displayed.

In this embodiment, preset processing refers to display-related processing of the target 3D body shape, which may include adding clothing, adding hair, facial processing, and similar tasks. Specifically: clothing refers to default or preconfigured 3D garments; facial processing may include operations like face blurring, among others. Of course, preset processing can also include other types of operations, and this application embodiment does not impose limitations on the specific types or number of preset processing methods. By performing preset processing on the target 3D body shape, the display of the target 3D body shape can be made more visually appealing, optimizing the presentation and overall effect of the 3D body shape model.

S605: in response to a touch operation performed on the target 3D body shape, adjusting the target 3D body shape according to a preset adjustment type corresponding to the touch operation; wherein the preset adjustment types include at least one of rotation, magnification, or reduction.

In this embodiment, a touch operation refers to the user's interactive action on the target 3D body shape or the 3D body shape to be displayed. This may include actions such as rotating, sliding, or tapping, among others. The specific types of touch operations are not limited in this embodiment. The preset adjustment type refers to the type of adjustment corresponding to the touch operation, which can specifically include actions such as rotation, magnification, or reduction, among others.

In this step, when the user needs to rotate or zoom in on a specific part of the target 3D body shape model (i.e., the target 3D body shape), they can perform a sliding operation directly on the target 3D body shape model or use a preset rotation or zoom control. The electronic device, in response to the user's touch operation, can adjust the target 3D body shape model according to the preset adjustment type corresponding to the touch operation. This approach meets the user's viewing needs, offers convenient operation, and further enhances the user's interactive experience.

In this embodiment, the electronic device obtains at least two images of the target object taken from at least two different shooting angles. The images are then input into the target 3D reconstruction model, which determines the global features, shooting parameters, and posture parameters corresponding to the target object. Based on these global features, shooting parameters, and posture parameters, the target 3D reconstruction model reconstructs the target 3D body shape. The reconstructed 3D body shape undergoes preset processing to produce a 3D body shape to be displayed, which is then presented to the user. In response to a touch operation on the target 3D body shape, the electronic device adjusts the 3D body shape according to the preset adjustment type corresponding to the touch operation. In this way, this embodiment of the application enables the automatic extraction of global features, shooting parameters, and posture parameters of the target object through the target 3D reconstruction model, and reconstructs the target 3D body shape. This improves the convenience of body shape reconstruction and reduces costs. Moreover, using a plurality of images from a plurality of shooting angles for image processing enhances the precision of body shape reconstruction. At the same time, post-processing is applied to the target 3D body shape, and users are enabled to interact with the model, optimizing the model's display effect and further improving the user interaction experience.

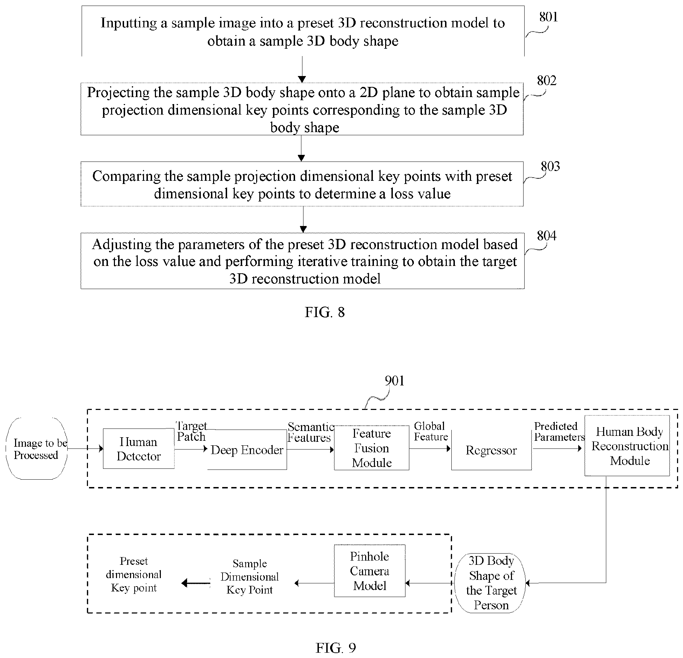

Based on the above embodiment, the training process of the target 3D reconstruction model is introduced below in conjunction with FIG. 8. FIG. 8 illustrates the training flow of a target 3D reconstruction model in an exemplary embodiment of this application. Please refer to FIG. 8, which includes the following steps:
S801: inputting a sample image into a preset 3D reconstruction model to obtain a sample 3D body shape.
   In this embodiment, sample images refer to training sample images used for model training. Similar to the images to be processed, the sample images can specifically include at least two images captured from at least two shooting angles. The preset 3D reconstruction model refers to the model being trained, and the sample 3D body shapes represent the output results of the model being trained. It should be understood that the training process of the target 3D reconstruction model can occur either before inputting at least two images to be processed into the target 3D reconstruction model or before obtaining the at least two images of the target object. This application embodiment does not impose limitations on the specific timing of model training.
S802: projecting the sample 3D body shape onto a 2D plane to obtain sample projection dimensional key points corresponding to the sample 3D body shape.
   In this embodiment, the sample projection dimensional key points refer to the size key points of the sample 3D body shape on the 2D plane. After obtaining the sample 3D body shape, the system can use a standard pinhole camera model (camera model) to project the sample 3D body shape and its corresponding dimensional key points (x, y, z) reconstructed by the preset 3D reconstruction model onto the 2D plane (x, y). This process yields the sample projection dimensional key points (projected size key points).
S803: comparing the sample projection dimensional key points with preset dimensional key points to determine a loss value.

In this embodiment, after obtaining the sample projection dimensional key points, these points can be compared with the preset dimensional key points to determine the deviation between the two, and the loss value can be calculated. The preset dimensional key points refer to the ground truth (GT) size key points that are manually labeled. The number of these preset dimensional key points can be M.

In this step, the preset dimensional key point can be obtained by manually annotating 2D images. This approach is cost-effective, scalable, and can efficiently represent the human body shape. After obtaining the sample 3D body shape model, it can be projected onto a 2D plane to generate the sample dimensional key point. By comparing the sample dimensional key point with the preset dimensional key point, the deviation between the two can be determined, and this deviation can be used to calculate the loss value. Subsequently, parameter tuning and iterative training can be performed based on the loss value.

S804: adjusting the parameters of the preset 3D reconstruction model based on the loss value and performing iterative training to obtain the target 3D reconstruction model.

In this embodiment, after calculating the loss value, the parameters of the preset 3D reconstruction model can be adjusted, and iterative training can be performed. Ultimately, the target 3D reconstruction model can be obtained, which can then be used for inference in subsequent processes.

In this embodiment, a supervised training approach is used for model training. Supervised training refers to a method where the model is guided to automatically extract features from the raw input that are necessary to complete a specified task. In this embodiment, the manually labeled preset dimensional key point ground truth (GT) is used as supervision to calculate the loss value and guide the training of the entire model. This approach improves the accuracy of the model training process.

Based on any of the above embodiments, FIG. 9 illustrates an exemplary technical logic diagram for image processing provided in this application embodiment. As shown in FIG. 9, the target 3D reconstruction model 901 may include a human detector, a deep encoder, a feature fusion module, a regressor, and a human body reconstruction model. The electronic device obtains at least two images of the target object captured from at least two different angles. These images are first input into the human detector, which detects the regions of the person in the images and segments them to obtain at least two target image patches. Subsequently, the electronic device inputs these target patches into a deep encoder based on a convolutional neural network (CNN), which shares weights, to extract a set of semantic features corresponding to each target patch. Next, the electronic device treats the extracted semantic features as at least two sequences and inputs them into a feature fusion module based on a transformer, obtaining multi-angle fused global features. The fused global features are then used as inputs to a regressor built with a fully connected network, which fits parameters such as the shooting parameters, pose, and body shape to obtain predicted parameters. Finally, the electronic device inputs these predicted parameters into an extended human body reconstruction model that supports dimensional key points, obtaining the reconstructed 3D body shape of the target. In the inference stage, the target 3D reconstruction model takes the images to be processed as input and outputs the 3D body shape of the target person, significantly improving the convenience and accuracy of body shape reconstruction.

During the training phase, the sample 3D body shape can be projected onto a 2D plane using a standard pinhole camera model, along with its corresponding dimensional key points, to obtain the sample projection dimensional key points. The manually annotated preset dimensional key points are used as supervision to calculate the loss value and guide the training of the entire model, ultimately obtain the target 3D reconstruction model. It should be noted that the portion of the pinhole camera model within the dashed box in FIG. 9 is used only during the training phase and is not executed during actual inference. Specifically, the pinhole camera model is used in the training phase solely for projecting the 3D model onto the 2D plane. During inference, the target 3D reconstruction model can directly output the target 3D body shape model without requiring the use of the pinhole camera model.

**In** this embodiment, the electronic device uses at least two images captured from at least two different shooting angles as input. It extracts the semantic features corresponding to each shooting angle separately and then performs feature fusion. This approach ensures that the extracted human body features are comprehensive and global, enabling high-precision body shape reconstruction.

**In** this embodiment, preset dimensional key points are used as body shape representations to supervise the training of the preset 3D reconstruction model. M preset dimensional key points, which are highly correlated with human body characteristics, are defined to replace the skeletal key point approach commonly used in related technologies. The preset dimensional key points can be obtained by manually annotating 2D images, making the approach cost-effective and scalable. Compared to skeletal key points, these dimensional key points provide a more efficient representation of human body shapes, addressing the issue in which the same set of skeletal key points can correspond to a plurality of possible body shapes.

**In** related technologies, a single monocular image is often used for 2D reconstruction. However, an image is essentially a 2D projection of a 3D object. Since a monocular image inherently loses one dimension of information, it is typically impossible to reconstruct the 3D information of an object accurately using just a single image.

**In** this embodiment, the electronic device uses monocular, multi-angle images to perform 3D human body reconstruction. A weight-sharing deep encoder is used to separately extract the semantic features for each viewing angle. Then, a feature fusion module performs multi-angle and global feature fusion to generate the global features. The fused global features are used as the input to the prediction head, which regresses the body shape parameters, pose parameters, and shooting parameters to obtain the predicted parameters. Finally, the predicted parameters are fed into the human body reconstruction model to obtain the target 3D body shape. By extracting and fusing multi-angle information of the human body shape, this approach achieves high-precision human body shape reconstruction. The reconstructed target 3D body shape has a high degree of matching with the real human body, significantly improving both the accuracy and speed of body shape reconstruction.

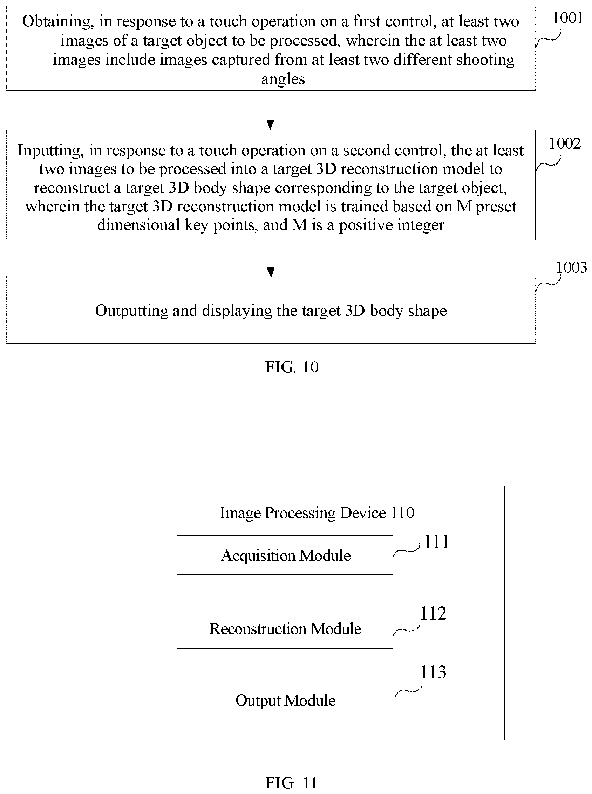

Based on the above embodiment, FIG. 10 illustrates another flow diagram of an image processing method provided in this exemplary embodiment. Please refer to FIG. 10, where the method may include the following steps:
S1001: in response to a touch operation on the first control, obtaining at least two images of a target object to be processed; wherein the at least two images include images captured from at least two different shooting angles.
S1002: in response to a touch operation on a second control, inputting the at least two images to be processed into the target 3D reconstruction model to reconstruct a target 3D body shape corresponding to the target object; wherein the target 3D reconstruction model is trained based on M preset dimensional key points, wherein M is a positive integer.

In this application embodiment, the first control refers to a preconfigured image upload control, and the second control refers to a preconfigured 3D body shape generation control. In one possible implementation, the electronic device can display both the first and second controls simultaneously on the user interface. For example, the interface can display an "Image Upload" control (first control) and a "3D Model Generation" control (second control). Users can click the "Image Upload" control to upload the images to be processed and then click the "3D Model Generation" control to generate the target 3D body shape.

In another possible implementation, the electronic device may only display the second control on the user interface. When a user wants to generate the target 3D body shape, they can click the second control. The electronic device, in response to the user's touch operation on the second control, will display an image upload interface, which includes the first control. At this point, the user can select the images to be processed and touch the first control to upload the images. The electronic device can then obtain the images to be processed and input them into the target 3D reconstruction model for body shape reconstruction. Of course, the first and second controls can be presented in other display methods as well, and this application embodiment does not impose any limitations on their specific display approach.

S1003: outputting and displaying the target 3D body shape.

In this embodiment, after reconstructing the target 3D body shape, the electronic device can display the target 3D body shape on the interface. This allows users to intuitively view the reconstructed 3D body shape, facilitating subsequent operations such as clothing selection and purchase.

In this embodiment, the electronic device responds to a touch operation on the first control to obtain at least two images of the target object to be processed. These images include at least two images taken from different shooting angles. In response to a touch operation on the second control, the electronic device inputs the at least two images into the target 3D reconstruction model to reconstruct the target 3D body shape corresponding to the target object. The target 3D reconstruction model is trained using M preset dimensional key points, where M is a positive integer. Finally, the reconstructed target 3D body shape is output and displayed. In this way, this application embodiment allows the reconstruction of the target object's 3D body shape by inputting at least two images into the target 3D reconstruction model. This improves the convenience of body shape reconstruction and reduces costs. Additionally, since the target 3D reconstruction model is trained based on preset dimensional key points, the reconstruction precision is higher. Using images from different angles as input further enhances the accuracy of human body shape reconstruction.

FIG. 11 illustrates the structural diagram of an image processing device provided in this exemplary embodiment. Please refer to FIG. 11, where the image processing device 110 includes the following components:
acquisition module 111: used to obtain at least two images of the target object to be processed; these images include at least two images captured from different shooting angles;
reconstruction module 112: used to input the at least two images to be processed into the target 3D reconstruction model to reconstruct the target 3D body shape corresponding to the target object; the target 3D reconstruction model is trained based on M preset dimensional key points, where M is a positive integer;
output module 113: used to output the target 3D body shape.

In one possible implementation, the reconstruction module 112 is specifically used to:
determine the global features, shooting parameters, and posture parameters corresponding to the target object based on at least two images to be processed through the target 3D reconstruction model;
reconstruct the target 3D body shape using the global features, shooting parameters, and posture parameters through the target 3D reconstruction model.

In one possible implementation, the reconstruction module 112 is specifically used to:
determine the image region where the target object is located within the images to be processed;
segment the identified image region from the images to be processed to obtain at least two target image patches corresponding to the target object;
extract a set of semantic features corresponding to each target image patch;
fuse the at least two sets of semantic features to obtain the global features.

In one possible implementation, the reconstruction module 112 is specifically used to:
input each target image patch into a deep encoder based on a convolutional neural network (CNN) to extract a set of semantic features corresponding to each target image patch; the target 3D reconstruction model includes the deep encoder based on a convolutional neural network.

In one possible implementation, the reconstruction module 112 is specifically used to:
input the at least two sets of semantic features as at least two sequences into a feature fusion module to obtain the global features. The target 3D reconstruction model includes the feature fusion module.

In one possible implementation, the reconstruction module 112 is specifically used to:
perform prediction processing on the images to be processed using an encoder and a regressor, to obtain the shooting parameters and posture parameters; the target 3D reconstruction model includes the encoder and the regressor.

In one possible implementation, the reconstruction module 112 is specifically used to:
fit the global features, shooting parameters, and posture parameters to obtain the predicted parameters;
input the predicted parameters into a human body reconstruction model to obtain the target 3D body shape; the target 3D reconstruction model includes the human body reconstruction model.

In one possible implementation, the device 110 further includes:
input module: used to input the sample images into a preset 3D reconstruction model to obtain the sample 3D body shape;
projection module configured to project the sample 3D body shape onto a 2D plane to obtain the sample projection dimensional key points corresponding to the sample 3D body shape;
comparison module configured to compare the sample projection dimensional key points with the preset dimensional key points to determine the loss value;
training module configured to adjust the parameters of the preset 3D reconstruction model based on the loss value and perform iterative training to obtain the target 3D reconstruction model.

In one possible implementation, the output module 113 is specifically used to:
perform preset processing on the target 3D body shape to obtain the 3D body shape to be displayed; the preset processing includes at least one of clothing addition or facial processing;
display the 3D body shape to be displayed.

In one possible implementation, the device 110 further includes:
adjustment module configured used to adjust the target 3D body shape in response to a touch operation on the target 3D body shape. The adjustment is performed according to the preset adjustment type corresponding to the touch operation. The preset adjustment types include at least one of rotation, magnification, or reduction.

The image processing device 110 provided in this application embodiment can execute the technical solutions described in the above method embodiments. Its implementation principles and beneficial effects are similar, and thus will not be repeated here.

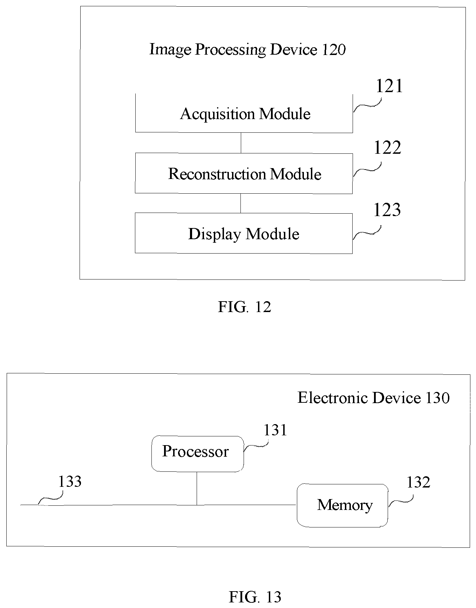

FIG. 12 illustrates the structural diagram of another image processing device 120 provided in this exemplary embodiment. Please refer to FIG. 12, where the image processing device 120 includes:
acquisition module 121 configured to obtain at least two images of the target object to be processed in response to a touch operation on the first control; these images include at least two images captured from different shooting angles;
reconstruction module 122 configured to, in response to a touch operation on the second control, input the at least two images to be processed into the target 3D reconstruction model to reconstruct the target 3D body shape corresponding to the target object; the target 3D reconstruction model is trained using M preset dimensional key points, where M is a positive integer;
display module 123 configured to output and display the target 3D body shape.

The image processing device 120 provided in this application embodiment can execute the technical solutions described in the above method embodiments. Its implementation principles and beneficial effects are similar, and thus will not be repeated here.

FIG. 13 illustrates the structural diagram of an electronic device 130 provided in this exemplary embodiment. Please refer to FIG. 13, where the electronic device 130 may include a processor 131 and a memory 132. As an example, the processor 131 and memory 132 are interconnected via a bus 133.

The memory 132 stores computer-executable instructions.

The processor 131 executes the computer-executable instructions stored in the memory 132, enabling the processor 131 to perform the image processing method as described in the above method embodiments.

Accordingly, this application embodiment provides a computer-readable storage medium, which stores computer-executable instructions. When the instructions are executed by a processor, they are used to implement the image processing method described in the above method embodiments.

Accordingly, this application embodiment also provides a computer program product, which includes a computer program. When executed by a processor, the computer program can implement the image processing method described in the above method embodiments.

Those skilled in the art will understand that the embodiments of the present invention can be provided in the form of a method, system, or computer program product. Therefore, the present invention can be implemented as a purely hardware-based embodiment, a purely software-based embodiment, or an embodiment that combines software and hardware aspects. Furthermore, the present invention can take the form of a computer program product implemented on one or more computer-readable storage media containing computer-usable program code. These storage media include, but are not limited to, magnetic disk storage, CD-ROM, optical storage, and the like.

The present invention is described with reference to the flowcharts and/or block diagrams of methods, devices (systems), and computer program products according to embodiments of the present invention. It should be understood that each flow and/or block in the flowcharts and/or block diagrams, as well as the combination of flows and/or blocks in the flowcharts and/or block diagrams, can be implemented by computer program instructions. These computer program instructions can be provided to a processor of a general-purpose computer, a special-purpose computer, an embedded processor, or other programmable data processing device to produce a machine. When the instructions are executed by the processor of the computer or other programmable data processing device, they create a means for implementing the functions specified in one or more flows in the flowcharts and/or one or more blocks in the block diagrams.

These computer program instructions can also be stored in a computer-readable storage medium that directs a computer or other programmable data processing device to operate in a specific manner. As a result, the instructions stored in the computer-readable storage medium produce an article of manufacture that includes instruction means for implementing the functions specified in one or more flows in the flowcharts and/or one or more blocks in the block diagrams.

These computer program instructions can also be loaded onto a computer or other programmable data processing device, causing the computer or other programmable device to execute a series of operational steps to produce computer-implemented processes. In this way, the instructions executed on the computer or other programmable device provide steps for implementing the functions specified in one or more flows in the flowcharts and/or one or more blocks in the block diagrams.

In a typical configuration, a computing device includes one or more processors, input/output interfaces, network interfaces, and memory.

The memory may include non-persistent storage in the form of computer-readable media, such as random access memory (RAM), and/or non-volatile memory, such as read-only memory (ROM) or flash memory (flash RAM). The memory serves as an example of a computer-readable medium.

A computer-readable medium includes permanent and non-permanent, removable and non-removable media implemented in any method or technology for storing information. The information may include computer-readable instructions, data structures, program modules, or other data. Examples of computer storage media include, but are not limited to: phase-change memory (PRAM), static random-access memory (SRAM), dynamic random-access memory (DRAM), other types of random-access memory (RAM), read-only memory (ROM), electrically erasable programmable read-only memory (EEPROM), flash memory, or other memory technologies; compact disc read-only memory (CD-ROM), digital versatile discs (DVD), or other optical storage; magnetic cassettes, magnetic tapes, magnetic disk storage, or other magnetic storage devices; or any other non-transitory medium capable of storing information that can be accessed by a computing device. As defined herein, a computer-readable medium does not include transitory computer-readable media, such as modulated data signals and carrier waves.

It should also be noted that the terms "comprise," "include," or any of their other variants are intended to encompass a non-exclusive inclusion, so that a process, method, product, or device that includes a list of elements not only includes those elements but may also include other elements that are not explicitly listed, or elements that are inherently part of the process, method, product, or device. Unless explicitly stated otherwise, an element defined by the phrase "comprises a..." does not exclude the presence of additional identical elements in the process, method, product, or device that includes the element.

The above descriptions are merely embodiments of this application and are not intended to limit it. For those skilled in the art, various modifications and changes can be made to this application. Any modifications, equivalent substitutions, improvements, or the like made within the spirit and principles of this application shall fall within the scope of the claims of this application.

## Claims

1. An image processing method, comprising:
obtaining at least two images of a target object to be processed, wherein the at least two images to be processed include images captured from at least two different shooting angles;
inputting the at least two images to be processed into a target three-dimensional (3D) reconstruction model to reconstruct a target 3D body shape corresponding to the target object, wherein the target 3D reconstruction model is trained based on M preset dimensional key points, and M is a positive integer; and
outputting the target 3D body shape.

2. The method according to claim 1, wherein inputting the at least two images to be processed into the target 3D reconstruction model to reconstruct the target 3D body shape corresponding to the target object comprises:
determining a global feature, a shooting parameter, and a posture parameter corresponding to the target object based on the at least two images to be processed and through the target 3D reconstruction model; and
reconstructing the target 3D body shape based on the global feature, shooting parameter, and posture parameter through the target 3D reconstruction model.

3. The method according to claim 2, wherein determining the global feature corresponding to the target object through the target 3D reconstruction model comprises:
identifying, in the at least two images to be processed, an image region where the target object is located;
segmenting the image region from the at least two images to be processed to obtain at least two target image patches corresponding to the target object;
determining a set of semantic features corresponding to each of the target image patches; and
fusing at least two sets of the semantic features to obtain the global feature.

4. The method according to claim 3, wherein determining a set of semantic features corresponding to each of the target image patches comprises:
inputting each of the target image patches into a deep encoder based on a convolutional neural network (CNN) to extract a set of semantic features corresponding to the target image patch,
wherein the target 3D reconstruction model comprises the deep encoder based on the convolutional neural network.

5. The method according to claim 3, wherein fusing the at least two sets of the semantic features to obtain the global feature comprises:
inputting the at least two sets of semantic features as at least two sequences into a feature fusion module to obtain the global feature, wherein the target 3D reconstruction model comprises the feature fusion module.

6. The method according to claim 2, wherein determining the shooting parameter and posture parameter corresponding to the target object through the target 3D reconstruction model comprises:
performing prediction processing on the at least two images to be processed using an encoder and a regressor to obtain the shooting parameter and posture parameter, wherein the target 3D reconstruction model comprises the encoder and the regressor.

7. The method according to claim 2, wherein reconstructing the target 3D body shape based on the global feature, shooting parameter, and posture parameter through the target 3D reconstruction model comprises:
fitting the global feature, shooting parameter, and posture parameter to obtain a predicted parameter; and
inputting the predicted parameter into a human body reconstruction model to obtain the target 3D body shape, wherein the target 3D reconstruction model comprises the human body reconstruction model.

8. The method according to any one of claims 1 to 7, further comprising, before inputting the at least two images to be processed into the target 3D reconstruction model:
inputting a sample image into a preset 3D reconstruction model to obtain a sample 3D body shape;
projecting the sample 3D body shape onto a 2D plane to obtain sample projection dimensional key points corresponding to the sample 3D body shape;
comparing the sample projection dimensional key points with preset dimensional key points to determine a loss value; and
adjusting the parameters of the preset 3D reconstruction model based on the loss value and performing iterative training to obtain the target 3D reconstruction model.

9. The method according to claim 1, wherein outputting the target 3D body shape comprises:
performing preset processing on the target 3D body shape to obtain a 3D body shape to be displayed, wherein the preset processing includes at least one of clothing addition or facial processing; and
displaying the 3D body shape to be displayed.

10. An image processing method, comprising:
obtaining, in response to a touch operation on a first control, at least two images of a target object to be processed, wherein the at least two images include images captured from at least two different shooting angles;
inputting, in response to a touch operation on a second control, the at least two images to be processed into a target 3D reconstruction model to reconstruct a target 3D body shape corresponding to the target object, wherein the target 3D reconstruction model is trained based on M preset dimensional key points, and M is a positive integer; and
outputting and displaying the target 3D body shape.

11. An image processing device, comprising:
an acquisition module, configured to obtain at least two images of a target object to be processed, wherein the at least two images include images captured from at least two different shooting angles;
a reconstruction module, configured to input the at least two images to be processed into a target 3D reconstruction model to reconstruct a target 3D body shape corresponding to the target object, wherein the target 3D reconstruction model is trained based on M preset dimensional key points, and M is a positive integer; and
an output module, configured to output the target 3D body shape.

12. An electronic device, comprising:
a memory configured to store computer-executable instructions; and
a processor configured to execute the computer-executable instructions stored in the memory, such that the processor performs the image processing method according to any one of claims 1 to 10.

13. A computer-readable storage medium, wherein the computer-readable storage medium stores computer-executable instructions, which, when executed by a processor, implement the image processing method according to any one of claims 1 to 10.

14. A computer program product, comprising a computer program, wherein the computer program, when executed by a processor, implements the image processing method according to any one of claims 1 to 10.
